# EUROPÄISCHE PATENTSCHRIFT

(11) **EP 2 561 015 B1**
(45) Veröffentlichungstag und Bekanntmachung des Hinweises auf die Patenterteilung: **02.03.2016**
(21) Anmeldenummer: 11715004.5
(22) Anmeldetag: 20.04.2011
(51) Int. Cl.: C08K 5/523, C08L 55/02, C08L 69/00

(54) **LEICHTFLIEßENDE POLYCARBONAT/ABS-FORMMASSEN MIT GUTEN MECHANISCHEN EIGENSCHAFTEN UND GUTER OBERFLÄCHE**
EASY-FLOWING POLYCARBONATE/ABS MOLDING COMPOUNDS HAVING GOOD MECHANICAL PROPERTIES AND A GOOD SURFACE
MATIÈRES À MOULER EN POLYCARBONATE/ABS PRÉSENTANT UNE BONNE APTITUDE À L'ÉCOULEMENT, DE BONNES PROPRIÉTÉS MÉCANIQUES ET UNE BONNE SURFACE

(30) Priorität: 23.04.2010 DE 102010018234
(43) Veröffentlichungstag der Anmeldung: 27.02.2013
(73) Patentinhaber: Covestro Deutschland AG, 51373 Leverkusen (DE)
(72) Erfinder: ECKEL, Thomas, 41540 Dormagen (DE); THUERMER, Burkhard, 53332 Bornheim (DE); TASCHNER, Vera, 50823 Köln (DE); WITTMANN, Dieter, 51375 Leverkusen (DE)
(74) Vertreter: Levpat
(86) Internationale Anmeldenummer: PCT/EP2011/056346
(87) Internationale Veröffentlichungsnummer: WO 2011/131727

(56) Entgegenhaltungen:
- US-A- 6 083 428
- US-A1- 2007 135 568
- US-A1- 2009 214 861

## Beschreibung

Die vorliegende Erfindung betrifft flammwidrige Formmassen aus Polycarbonaten und Pfropfpolymerisaten, die neben einem guten Fließverhalten sehr gute mechanische Eigenschaften sowie eine besonders gute, störungsfreie Oberfläche aufweisen. Diese Formmassen eignen sich insbesondere für Spritzguß-Anwendungen für Formteile mit dünnen Wandstärken und Hochglanz-Oberflächen.

EP 0 363 608 werden Polymermischungen aus aromatischem Polycarbonat, styrolhaltigen Copolymer oder Pfropfcopolymer sowie oligomeren Phosphaten als Flammschutzadditive beschrieben. Für bestimmte Anwendungsbereiche ist das mechanische Eigenschaftsniveau insbesondere die Bindenahtfestigkeit, das Fließverhalten und insbesondere die Oberflächenqualität nicht ausreichend.

In der EP 0 704 488 werden Formmassen aus aromatischem Polycarbonat, styrolhaltigen Copolymerisaten und Pfropfpolymerisaten mit einer spezielllen Pfropfbasis in bestimmten Mengenverhältnissen beschrieben. Diese Frommassen können gegebenenfalls mit Phosphorverbindungen flammwidrig ausgerüstet werden. Diese Formmassen weisen eine sehr gute Kerbschlagzähigkeit auf, allerdings sind Fließverhalten und Oberflächenqualität für bestimmte Einsatzzwecke nicht ausreichend.

EP 747 424 beschreibt thermoplastische Harze, die Phosphatverbindungen mit einem Molekulargewicht von 500 bis 2000 und Phosphatverbindungen mit einem Molekulargewicht von 2300 bis 11000 als Flammschutzmittel enthalten, wobei eine Vielzahl von thermoplastischen Harzen aufgezählt werden. Durch die hohen Molekulargewichte der Phosphorverbindungen wird das Fließverhalten der Formmassen deutlich beeinträchtigt.

In EP 754 531 werden verstärkte PC/ABS-Formmassen beschrieben, die für Präzisionsteile geeignet sind. Als Flammschutzmittel werden unter anderem auch Oligophosphate des BPA-Types verwendet. Die hohen Füllstoffanteile wirken sich sehr nachteilig auf die machanischen Eigenschaften und das Fließvehalten aus.

In EP 755 977 werden Polymermischungen aus aromatischen Polycarbonat, Pfropfcopolymer mit einem Kautschukgehalt < 25% sowie oligomeren Phosphaten mit einem Anteil < 8% beschrieben. Durch den begrenzten Flammschutzmittelgehalt ist das Fließverhalten und die Flammwidrigkeit nicht ausreichend. Außerdem finden sich keine Hinweise auf die gewünschte gute Oberflächenqualität.

In EP 1 003 809 werden PC/ABS-Formmassen beschrieben, die oligomere Phosphorverbindungen und Pfropfpolymerisate aus einer Pfropfgrundlage mit einer bestimmten Teilchengröße enthalten. Diese Formmassen zeichnen sich durch gute mechanische Eigenschaften, inbesondere auch unter erhöhter Elastizitätsbeanspruchung aus. Ihr Fließverhalten, ihre Flammwidrigkeit und ihre Oberflächenqualität sind allerdings für bestimmte Anwendungsbereiche nicht ausreichend.

EP 0 983 315 beschreibt Formmassen aus aromatischem Polycarbonat, Pfropfpolymerisat und einer Flammschutzmittel-Kombination aus einer monomeren und einer oligomeren Phosphorverbindung. Diese Formmassen besitzen eine hohe Wärmeformbeständigkeit und exzellente mechanische Eigenschaften (Kerbschlagzähigkeit und Bindenahtfestigkeit), allerdings ist das Fließverhalten und die Flammwidrigkeit insbesondere bei Formkörpern mit dünnen Wandstärken nicht ausreichend.

E P 1 165 680 beschreibt flammwidrige PC/ABS-Formmassen mit guten mechanischen Eigenschaften (Zugfestigkeit, Bindenahtfestigkeit), die oligomere Phosphate mit einer definierten Kettenlänge enthalten. Die Mengen-Bereiche für Flammschutzmittel und Pfropfpolymerisat sind sehr breit gewählt. Deshalb wird die erfindungsgemäße Eigenschaftkombination aus Fließverhalten, guten mechanischen Eigenschaften und guter Oberflächenqualität nicht beschrieben.

Aufgabe der vorliegenden Erfindung war es, Polycarbonat-Formmassen bereitzustellen, die neben einem guten Fließverhalten sehr gute mechanische Eigenschaften, insbesondere Kerbschlagzähigkeit und Bindenahtfestigkeit, sowie eine besonders gute störungsfreie Oberfläche aufweisen. Die Formmassen sollen darüber hinaus eine gute Flammwidrigkeit, auch bei geringen Wandstärken (<1,5 mm) besitzen.

Überraschenderweise wurde nun gefunden, dass die o. g. Eigenschaften erhalten werden, wenn ein besonders effizientes Pfropfpolymerisat in Kombination mit einem möglichst geringen Anteil freiem Polymerisat der Monomere der Pfropfhülle wie beispielsweise SAN eingesetzt wird. Hierbei müssen die Anteile Pfropfpolymerisat und Flammschutzmittel in einem ausgewähltem Bereich liegen, um eine optimale Kombination aus Fließverhalten und mechanischen Eigenschaften zu erhalten, während der Anteil an freiem Polymerisat der Monomere der Pfropfhülle, 2,0 Gew.%, bevorzugt 1,5 Gew.%, in der Gesamtzusammensetzung nicht überschreiten darf. Die so zusammengesetzten Formmassen zeichnen durch verbesserte mechanische Eigenschaften wie hohe Kerbschlagzähigkeit in Verbindung mit einer guten Bindenahtfestigkeit sowie eine optimierte Oberflächenkosmetik aus. Durch den hohen Anteil an Flammschutzmittel verfügen die PC/ABS-Mischungen über exzellente Flammwidrigkeiten und ein besonders gutes Fließverhalten.

Gegenstand der Erfindung sind flammwidrige, thermoplastische Formmassen enthaltend
A) 65,0 bis 82,0 Gew.-Teilen, vorzugsweise 70,0 bis 80,0 Gew.-Teilen, besonders bevorzugt 73,0 bis 78,0 Gew.-Teilen mindestens eines aromatischen Polycarbonats,
B) 4,0 bis 11,0 Gew.-Teilen, vorzugsweise 5,0 bis 10,0 Gew.-Teilen, besonders bevorzugt 5,0 bis 9,0 Gew.-Teilen mindestens eines Pfropfpolymerisats aus
   B.1) 5 bis 95 Gew.-Teile, einer Mischung aus
      B.1.1) 50 bis 95 Gew.-Teilen Styrol, α-Methylstyrol, methylkemsubstituiertem Styrol, C₁-C₈-Alkylmethacrylat, insbesondere Methylmethacrylat, C₁-C₈-alkylacrylat, insbesondere Methylacrylat, oder Mischungen dieser Verbindungen und
      B.1.2) 5 bis 50 Gew.-Teilen Acrylnitril, Methacrylnitril, C₁-C₈-Alkylmethacrylaten, insbesondere Methylmethacrylat, C₁-C₈-Alkylacrylat, insbesondere Methylacrylat, Maleinsäureanhydrid, C₁-C₄-alkyl-bzw. Phenyl-N-substituierte Maleinimide oder Mischungen dieser Verbindungen auf
   B.2) 5 bis 95 Gew.-Teilen einer kautsclmkhaltigen Pfropfgrundlage
C) 14,0 bis 24,0 Gew.-Teilen, bevorzugt 15,0 bis 20,0 Gew.-Teilen, besonders bevorzugt 15,0 bis 18,0 Gew.-Teilen mindestens eines phosphorhaltigen Flammschutzmittels,
wobei die Summe der Gewichtsteile der Komponenten A bis C sich zu 100 Gewichtsteilen addiert und der Gesamtanteil des aus den Pfropfmonomeren gebildeten oder frei zugesetztem, nicht chemisch an die Pfropfgrundlage gebundenen Polymerisats B.1), weniger als 2,0 Gew.% bezogen auf die Gesamtformmasse ist.

Optional können weitere Additive D) in einem Anteil von 0,05 - 15,00 Gew.-Teile, bevorzugt 0,2 - 10,0 Gew.-Teile, besonders bevorzugt 0,4 - 5,0 Gew.-Teile vorhanden sein.

Besonders bevorzugte Formmassen enthalten als Komponente D) neben optionalen weiteren Additiven ein fluoriertes Polyolefin in 0,05 bis 5,0 Gew.-Teilen, vorzugsweise 0,1 bis 2,0 Gew.-Teile, besonders bevorzugt 0,1 bis 1,0 Gew.-Teilen.

Besonders bevorzugte Formmassen enthalten als Komponente D) neben optionalen weiteren Additiven ein Entformungsmittel, z.B. Pentaerythrittetrastearat, in 0,1 bis 1,5 Gew.-Teilen, vorzugsweise 0,2 bis 1,0 Gew.-Teile, besonders bevorzugt 0,3 bis 0,8 Gew.-Teilen.

Besonders bevorzugte Formmassen enthalten als Komponente D) neben optionalen weiteren Additiven mindestens einen Stabilisator, beispielsweise ausgewählt aus der Gruppe der sterisch gehinderten Phenole, Phosphite sowie Mischungen daraus und besonders bevorzugt Irganox® B900, in 0,01 bis 0,4 Gew.-Teilen, vorzugsweise 0,03 bis 0,3 Gew.-Teile, besonders bevorzugt 0,06 bis 0,2 Gew.-Teilen.

### Komponente A

Erfindungsgemäß geeignete aromatischec Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 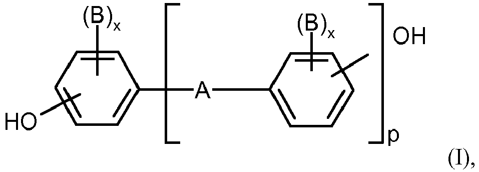 wobei
A eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
   oder ein Rest der Formel (II) oder (III) 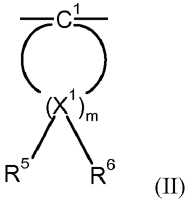 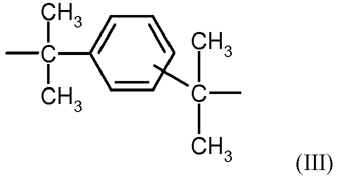
B jeweils C₁ bis C₁₂-Alkyl, vorzugsweise Methyl, Halogen, vorzugsweise Chlor und/oder Brom
x jeweils unabhängig voneinander 0, 1 oder 2,
p 1 oder 0 sind, und
R⁵ und R⁶ für jedes X¹ individuell wählbar, unabhängig voneinander Wasserstoff oder C₁ bis C₆-Alkyl, vorzugsweise Wasserstoff, Methyl oder Ethyl,
X¹ Kohlenstoff und
m eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-Cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenole oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Gewichtsmittelmolekulargewichte (M_{w}, gemessen durch GPC (Gelpermeationschromatographie mit Polycarbonatstandard) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 Mo-l%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.-%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

### Komponente B

Bevorzugte Polymerisate B sind partiell vernetzt und besitzen Gelgehalte (gemessen in Toluol) von über 20 Gew.-%, vorzugsweise über 40 Gew.-%, insbesondere über 60 Gew.-%.

Der Gelgehalt wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die Pfropfpolymerisate B umfassen Pfropfpolymerisate aus:
B.1) 5 bis 95, vorzugsweise 30 bis 80 Gew.-Teile, einer Mischung aus
   B.1.1) 50 bis 95 Gew.-Teilen Styrol, α-Methylstyrol, methylkernsubstituiertem Styrol, C₁-C₈-Alkylmethacrylat, insbesondere Methylmethacrylat, C₁-C₈-Alkylacrylat, insbesondere Methylacrylat, oder Mischungen dieser Verbindungen und
   B.1.2) 5 bis 50 Gew.-Teilen Acrylnitril, Methacrylnitril C₁-C₈-Alkylmethacrylaten, insbesondere Methylmethacrylat, C₁-C₈-Alkylacrylat, insbesondere Methylacrylat, Maleinsäureanhydrid, C₁-C₄-alkyl- bzw. Phenyl-N-substituierte Maleinimide oder Mischungen dieser Verbindungen auf
B.2) 5 bis 95, vorzugsweise 20 bis 70 Gew.-Teilen einer kautschukhaltigen Pfropfgrundlage. Vorzugsweise hat die Pfropfgrundlage eine Glasübergangstemperatur unter -10°C.

Besonders bevorzugt ist eine Pfropfgrundlage auf Basis eines Polybutadienkautschuks.

Die Glasübergangstemperaturen wird mittels dynamischer Differenz-Thermoanalyse (DSC) gemäß der Norm DIN EN 61006 bei einer Heizrate von 10 K/min mit Definition der T_{g} als Mittelpunkttemperatur (Tangentenmethode) bestimmt.

Bevorzugte Pfropfpolymerisate B sind z.B. mit Styrol und/oder Acrylnitril und/oder (Meth-)Acrylsäurealkylestern gepfropfte Polybutadiene, Butadien/Styrol-Copolymerisate und Acrylatkautschuke; d.h. Copolymerisate der in der DE-O S 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzuge Pfropfpolymerisate B sind Pfropfpolymerisate, die durch Pfropfreaktion von
I. 10 bis 70, vorzugsweise 15 bis 50, insbesondere 20 bis 40 Gew.-%, bezogen auf Pfropfprodukt, mindestens eines (Meth-)Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth-)Acrylsäureester und 50 bis 90, vorzugsweise 65 bis 80 Gew.-%, bezogen auf Gemisch, Styrol auf
II. 30 bis 90, vorzugsweise 40 bis 85, insbesondere 50 bis 80 Gew.-%, bezogen auf Pfropfprodukt, eines Butadien-Polymerisats mit mindestens 50 Gew.-%, bezogen auf II, Butadienresten als Pfropfgrundlage.
erhältlich sind.

Der Gelanteil dieser Pfropfgrundlage II beträgt vorzugsweise mindestens 70 Gew.-% (in Toluol gemessen), der Pfropfgrad G 0,15 bis 0,55 und der mittlere Teilchendurchmesser d₅₀ des Pfropfpolymerisats B 0,05 bis 2, vorzugsweise 0,1 bis 0,6 µm.

(Meth-)Acrylsäureester I sind Ester der Acrylsäure oder Methacrylsäure und einwertiger Alkohole mit 1 bis 18 C-Atomen. Besonders bevorzugt sind Methacrylsäuremethylester, -ethylester und -propylester.

Die Pfropfgrundlage II kann neben Butadienresten bis zu 50 Gew.-%, bezogen auf II, Reste anderer ethylenisch ungesättigter Monomerer, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage II besteht aus reinem Polybutadien.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch Polymerisation der Pfropfmonomeren in Gegenwart der Pfropfgrundlage gewonnen werden.

Die erfindungsgemäßen Formmassen haben einen Gesamtanteil aus den aus Pfropfmonomeren gebildeten oder frei zugesetztem, nicht chemisch an die Pfropfgrundlage gebundenen Polymerisats, z.B. freies SAN, von weniger als 2,0 Gew.-% , vorzugsweise weniger als 1,5 Gew.-% (dh. von 0,0 - 2,0 Gew.%, vorzugsweise 0,0 - 1,5 Gew-.%), bezogen auf die Gesamtformmasse. Bei einer Erhöhung dieses Anteils verschlechtern sich die erfindungsgemäßen Eigenschaften drastisch.

Der Pfropfgrad G bezeichnet das Gewichtsverhältnis von aufgepfropften Pfropfmonomeren zur Pfropfgrundlage und ist dimensionslos.

Die mittlere Teilchengröße d₅₀ ist der Durchmesser, oberhalb und unterhalb dessen jeweils 50 Gew.-% der Teilchen liegen. Er kann mittels Ultrazentrifugenmessungen (W. Scholtan, H. Lange, Kolloid, Z. und Z. Polymere 250 (1972), 782-796) bestimmt werden.

### Komponente C

Phosphorhaltige Flammschutzmittel C im erfindungsgemäßen Sinne sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (V) 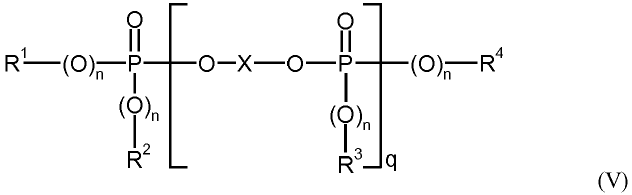 worin
R¹, R², R³ und R⁴, unabhängig voneinander jeweils gegebenenfalls halogeniertes C1 bis C8-Alkyl, jeweils gegebenenfalls durch Alkyl, vorzugsweise C1 bis C4-Alkyl, und/oder Halogen, vorzugsweise Chlor, Brom, substituiertes C5 bis C6-Cycloalkyl, C6 bis C20-Aryl oder C7 bis C12-Aralkyl,
n unabhängig voneinander, 0 oder 1,
q 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu acht Etherbindungen enthalten kann, bedeuten.

Bevorzugt stehen R¹, R², R³ und R⁴ unabhängig voneinander für C1 bis C4-Alkyl, Phenyl, Naphthyl oder Phenyl-C1-C4-alkyl. Die aromatischen Gruppen R¹, R², R³ und R⁴ können ihrerseits mit Halogen- und/oder Alkylgruppen, vorzugsweise Chlor, Brom und/oder C1 bis C4-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
X in der Formel (V) bedeutet bevorzugt einen ein- oder mehrkernigen aromatischen Rest mit 6 bis 30 C-Atomen. Dieser leitet sich bevorzugt von Diphenolen der Formel (I) ab.
n in der Formel (V) kann, unabhängig voneinander, 0 oder 1 sein, vorzugsweise ist n gleich 1.
q steht für ganzzahlige Werte von 0 bis 30, bevorzugt 0 bis 20, besonders bevorzugt 0 bis 10, im Falle von Mischungen für Durchschnittswerte von 0,8 bis 5,0, bevorzugt 1,0 bis 3,0, weiter bevorzugt 1,05 bis 2,00, und besonders bevorzugt von 1,08 bis 1,60.
X steht besonders bevorzugt für 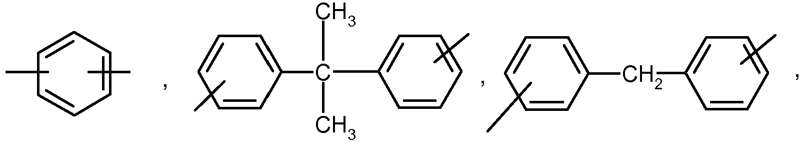 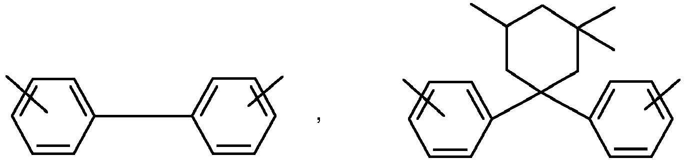 oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Phosphorverbindungen der Formel (V) sind insbesondere Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Resorcin verbrücktes Oligophosphat und Bisphenol A verbrücktes Oligophosphat. Der Einsatz von oligomeren Phosphorsäureestern der Formel (V), die sich vom Bisphenol A ableiten, ist insbesondere bevorzugt.

Höchst bevorzugt als Komponente C ist Bisphenol-A basierendes Oligophosphat gemäß Formel (Va).

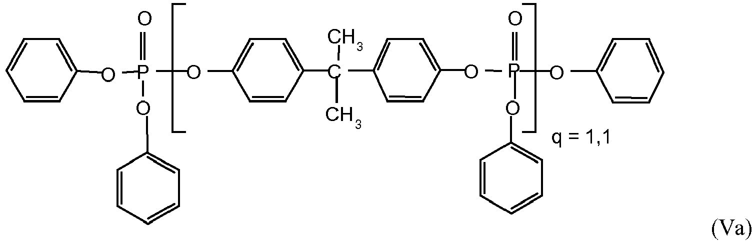

Die Phosphorverbindungen gemäß Komponente C sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Als erfindungsgemäße Komponente C können auch Mischungen von Phosphaten mit unterschiedlicher chemischer Struktur und/oder mit gleicher chemischer Struktur und verschiedenem Molekulargewicht eingesetzt werden.

Vorzugsweise werden Mischungen mit gleicher Struktur und unterschiedlicher Kettenlänge verwendet, wobei es sich bei dem angegebenen q-Wert um den mittleren q-Wert handelt. Der mittlere q-Wert kann bestimmt werden, indem mittels geeigneter Methode (Gaschromatographie (GC), High Pressure Liquid Chromatography (HPLC), Gelpermeationschromatographie (GPC)) die Zusammensetzung der Phosphorverbindung (Molekulargewichtsverteilung) bestimmt wird und daraus die Mittelwerte für q berechnet werden.

Weiterhin können Phosphonatamine und Phosphazene, wie sie in WO 00/00541 und WO 01/18105 beschrieben sind, als Flammschutzmittel eingesetzt werden.

Die Flammschutzmittel können allein oder in beliebiger Mischung untereinander oder in Mischung mit anderen Flammschutzmitteln eingesetzt werden.

### Weitere Additve D

Die Zusammensetzung kann weitere übliche Polymeradditive wie Flammschutzsynergisten, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasern, Carbon Nanotubes sowie organische Antistatika wie Polyalkylenether, Alkyl Sulfonate oder Polyamid-haltige Polymere) sowie Farbstoffe, Pigmente, Füll- und Verstärkungsstoffe, insbesondere Glasfasern, mineralische Verstärkungsstoffe und Carbonfasern, enthalten.

Insbesondere wird als Antidrippingmittel Polytetrafluorethylen (PTFE) oder PTFE-haltige Zusammensetzungen wie beispielsweise Masterbatche von PTFE mit styrol- oder methylmethacrylat enthaltenden Polymeren oder Copolymeren, als Pulver oder als koagulierte Mischung, z.B. mit Komponente B, eingesetzt.

Die als Antidrippingmittel eingesetzten fluorierten Polyolefine sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser d₅₀ von 0,05 bis 1000, vorzugsweise 0,08 bis 20 µm. Im allgemeinen haben die fluorierten Polyolefine eine Dichte von 1,2 bis 2,3 g/cm³. Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, No. 10 A, Oktober 1970, Mc Graw-Hill, Inc., New York, Seite 134 und 774; "Modern Plastics Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drucken von 7 bis 71 kg/cm² und bei Temperaturen von 0 bis 200°C, vorzugsweise bei Temperaturen von 20 bis 100°C. (Nähere Einzelheiten s. z.B. US-Patent 2 393 967). Je nach Einsatzform kann die Dichte dieser Materialien zwischen 1,2 und 2,3 g/cm³, die mittlere Teilchengröße zwischen 0,05 und 1000 µm liegen.

Die erfindungsgemäß bevorzugte fluorierte Polyolefine haben mittlere Teilchendurchmesser von 0,05 bis 20 µm, vorzugsweise 0,08 bis 10 µm, und eine Dichte von 1,2 bis 1,9 g/cm³.

Geeignete, in Pulverform einsetzbare fluorierte Polyolefine D sind Tetrafluorethylenpolymerisate mit mittleren Teilchendurchmesser von 100 bis 1000 µm und Dichten von 2,0 g/cm³ bis 2,3 g/cm³. Geeignete Tetrafluorethylenpolymerisat-Pulver sind handelsübliche Produkte und werden beispielsweise von der Fa. DuPont unter dem Handelsnamen Teflon^{®} angeboten.

Als Stabilisatoren gemäß Komponente D werden bevorzugt sterisch gehinderte Phenole und Phosphite oder deren Gemische, wie beispielsweise Irganox© B900 (BASF), verwendet. Pentaerythrittetrastearat wird bevorzugt als Entformungsmittel verwendet.

Die erfindungsgemäßen Formmassen können als Additiv D in, gegebenenfalls in Verbindung mit anderen Additiven D, zusätzlich 0,5 bis 13,0, vorzugsweise 1,0 bis 10,0 Gew.-%, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die erfindungsgemäßen Formmassen, enthaltend die Komponenten A bis C und gegebenenfalls weiteren bekannten Zusätzen D wie Stabilisatoren, Farbstoffen, Pigmenten, Gleit- und Entformungsmitteln, Füll- und Verstärkungsstoffen, Nukleiermittel sowie Antistatika, werden hergestellt, indem man die jeweiligen Bestandteile in bekannter Weise vermischt und bei Temperaturen von 200°C bis 330°C in üblichen Aggregaten wie Innenknetern, Extrudern und Doppelwellenschnecken schmelzcompoundiert oder schmelzextrudiert.

Gegenstand der vorliegenden Erfindung ist somit auch ein Verfahren zur Herstellung von thermoplastischen Formmassen, enthaltend die Komponenten A bis C sowie gegebenenfalls Additiven D, die nach erfolgter Vermischung bei Temperaturen von 200 bis 330°C in gebräuchlichen Aggregaten schmelzcompoundiert oder schmelzextrudiert werden.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art, z.B. für Haushaltsgeräte, wie TV- und HiFi-Geräte, Kaffeemaschinen, Mixer, Büromaschinen, wie Monitore oder Drucker, oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Besonders geeignet sind die Formmassen zur Herstellung von dünnwandigen Formteilen (z.B. Datentechnik-Gehäuseteile, TV-Gehäuse), wo besonders hohe Ansprüche an Kerbschlagzähigkeit, Fließnahtfestigkeit, Flammwidrigkeit und Oberflächenqualität der eingesetzten Kunststoffe gestellt werden.

Eine weitere Form der Verarbeitung ist die Herstellung von Formkörpern durch Blasformen oder durch Tiefziehen aus vorher hergestellten Platten oder Folien.

### Herstellung und Prüfung der Formmassen

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 20 kg/h bei einer Maschinentemperatur von 260°C compoundiert und granuliert. Die fertigen Granulate werden auf einer Spritzgussmaschine zu den entsprechenden Probekörpern verarbeitet (Massetemperatur 240 °C , Werkzeugtemperatur 80°C, Fließfrontgeschwindigkeit 240 mm/s).

Zur Charakterisierung der Eigenschaften der Probekörper wurden folgende Methoden angewandt:
Die **Fließfähigkeit** wurde nach ISO 11443 (**Schmelzeviskosität**) bestimmt.
Die **Bindenahtfestigkeit** anF wurde gemessen nach ISO 179/1eU an einem beidseitig angespritzten Prüfstab der Dimension 80x10x4 mm.
Die **Kerbschlagzähigkeit** ak wurde gemessen nach ISO 180/1A an einem einseitig angespritzten Prüfstab der Dimension 80x10x4 mm.
Die **Wärmeformbeständigkeit** wurde gemessen gemäß DIN ISO 306 (Vicat-Erweichungstemperatur, Verfahren B mit 50 N Belastung und einer Heizrate von 120 K/h) an einem einseitig angespritzten Prüfstab der Dimension 80x10x4 mm.
Die **Schmelzefließfähigkeit** (MVR) wird beurteilt anhand der Schmelzevolumenfließrate (MVR) gemessen gemäß ISO 1133 bei einer Temperatur von 240°C und mit einer Stempellast von 5 kg.
Das **Brandverhalten** wird nach UL 94V an Stäben der Abmessung 127 x 12,7 x 1,0 mm gemessen.

Die folgenden Beispiele dienen der weiteren Erläuterung der Erfindung.

### Beispiele

### Komponente A

Lineares Polycarbonat auf Basis Bisphenol-A mit einem gewichtsgemittelten Molekulargewicht M _{w} von 27500 g/mol (bestimmt durch GPC in Dichlormethan mit Polycarbonat als Standard).

### Komponente B1

ABS-Polymerisat, hergestellt durch Emulsions-Polymerisation von 43 Gew.-% (bezogen auf das ABS-Polymerisat) einer Mischung aus 27 Gew.-% Acrylnitril und 73 Gew.-% Styrol in Gegenwart von 57 Gew.-% (bezogen auf das ABS-Polymerisat) eines teilchenförmigen vernetzten Polybutadienkautschuks (mittlerer Teilchendurchmesser d₅₀ = 0,35 µm), wobei das Pfropfpolymerisat ca. 15 % freies, lösliches SAN enthält. Der Gelgehalt beträgt 72%.

### Komponente B2

Copolymerisat aus 77 Gew.-% Styrol und 23 Gew.-% Acrylnitril mit einem gewichtsgemittelten Molekulargewicht M_{w} von 130.000 g/mol (bestimmt durch GPC in Tetrahydrofuran mit Polystyrolstandard), hergestellt nach dem Masseverfahren.

### Komponente C

### Bisphenol-A basierendes Oligophosphat

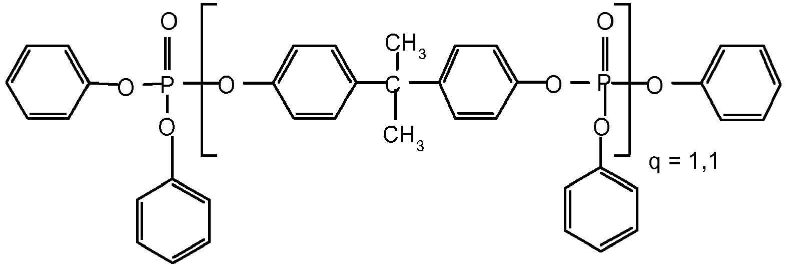

### Komponente D

**D1:** Polytetrafluorethylen-Pulver, CFP 6000 N, Fa. Du Pont.
**D2:** Pentaerythrittetrastearat als Gleit-/Entformungsmittel
**D3** Phosphitstabilisator, Irganox® B900 (Gemisch aus 80% Irgafos® 168 und 20% Irganox® 1076; BASF AG; Ludwigshafen / Irgafos®) 168 (Tris(2,4-di-tert-butyl-phenyl)-phosphit) / Irganox® 1076 (2,6-Di-tert-butyl-4-(octadecanoxycarbonylethyl)phenol)

**Tabelle 1: Versuchsdaten**

| **Komponenten** | **Gew.-%** | **1** | **2** | **3** | **4** | **5** | **6** | **7** | **8** | **9** | **10** | **11** | **12** | **13** | **14** | **15** |
|---|---|---|---|---|---|---|---|---|---|---|---|---|---|---|---|---|
| | | **vgl** | | | | | | | **vgl** | **vgl** | | | | | | |
| A | | 79,10 | 78,1 | 77,1 | 76,1 | 75,10 | 74,1 | 73,1 | 74,1 | 73,1 | 76,1 | 77,1 | 78,1 | 74,1 | 73,1 | 72,1 |
| B1 | | 7,00 | 7,00 | 7,00 | 7,00 | 7,00 | 7,00 | 7,00 | 7,00 | 7,00 | 6,00 | 5,00 | 4,00 | 8,00 | 9,00 | 10,0 |
| B2 | | | | | | | | | 1,00 | 2,00 | | | | | | |
| C | | 13,00 | 14,0 | 15,0 | 16,0 | 17,00 | 18,0 | 19,0 | 17,0 | 17,0 | 17,0 | 17,0 | 17,0 | 17,0 | 17,0 | 17,0 |
| D1 | | 0,40 | 0,40 | 0,40 | 0,40 | 0,40 | 0,40 | 0,40 | 0,40 | 0,40 | 0,40 | 0,40 | 0,40 | 0,40 | 0,40 | 0,40 |
| D2 | | 0,40 | 0,40 | 0,40 | 0,40 | 0,40 | 0,40 | 0,40 | 0,40 | 0,40 | 0,40 | 0,40 | 0,40 | 0,40 | 0,40 | 0,40 |
| D3 | | 0,10 | 0,10 | 0,10 | 0,10 | 0,10 | 0,10 | 0,10 | 0,10 | 0,10 | 0,10 | 0,10 | 0,10 | 0,10 | 0,10 | 0,10 |
| **Summe** | | **100,00** | **100,** | **100,** | **100,** | **100,0** | **100,** | **100,** | **100,** | **100,** | **100,** | **100,** | **100,** | **100,** | **100,** | **100,** |
| **Eigenschaften** | **Einheiten** | | | | | | | | | | | | | | | |
| **ak ISO 180/1A** | **[kJ/m²]** | **47,5** | **43,9** | **40,8** | **39,2** | **37,5** | **32,5** | **17,5** | **34,2** | **26,9** | **31,5** | **24,1** | **13,2** | **39,5** | **42,2** | **45,8** |
| **Vicat B 120** | **[°C]** | **106** | **103** | **99** | **96** | **93** | **90** | **87** | **93** | **92** | **93** | **93** | **94** | **92** | **91** | **90** |
| **UL 94 V /1,0 mm** | | **V-1** | **V-1** | **V-0** | **V-0** | **V-0** | **V-0** | **V-0** | **V-0** | **V-0** | **V-0** | **V-0** | **V-0** | **V-0** | **V-0** | **V-1** |
| **Nachbrennzeit** | **[s]** | **68** | **51** | **33** | **25** | **18** | **12** | **9** | **25** | **32** | **14** | **10** | **7** | **25** | **33** | **53** |
| **MVR 240/5kg** | **[ccm/10m** | **15,7** | **17,3** | **19,5** | **22,0** | **25,0** | **28,1** | **31,4** | **25,9** | **27,1** | **25,3** | **25,5** | **25,6** | **24,8** | **24,1** | **22,9** |
| **Schmelzeviskosität 260°C/1000s-1** | **[Pas]** | **235** | **221** | **209** | **197** | **185** | **167** | **151** | **179** | **167** | **187** | **188** | **190** | **182** | **177** | **169** |
| **anF Bindenaht** | **[kJ/m²]** | **55,5** | **54,8** | **54,1** | **53,7** | **52,3** | **49,5** | **46,0** | **35,6** | **21,0** | **53,1** | **53,8** | **54,1** | **49,7** | **47,8** | **43,1** |

Die erfindungsgemäßen Formmassen zeigen eine sehr vorteilhafte Eigenschaftskombination aus guten Fließverhalten, guten mechanische Eigenschaften, insbesondere der Kerbschlagzähigkeit und Bindenahtfestigkeit, sowie eine besonders gute störungsfreie Oberfläche, wobei die Formmassen eine gute Flammwidrigkeit, auch bei geringen Wandstärken (<1,5 mm, hier bei 1,0 mm gemessen) besitzen.

Ein Zusatz oder das Vorhandensein von freien Styrolarcrylnitril-Copolymeren führt schon ab einem Anteil von 2 Gew.% zu einen deutlichem Abfall der Bindenahtfestigkeit und der Kerbschlagzähigkeit, während sich der Gehalt an Flammschutzmittel außerhalb der erfindungsgemäßen Grenzen negativ auf Flammwidrigkeit, Nachbrennzeit oder Fließverhalten auswirkt.

## Patentansprüche

1. Flammwidrige, thermoplastische Formmassen enthaltend
A) 65,0 bis 82,0 Gew.-Teile mindestens eines aromatischen Polycarbonats,
B) 4,0 bis 11,0 Gew.-Teile mindestens eines Pfropfpolymerisats aus
B.1) 5 bis 95 Gew.-Teile, einer Mischung aus
B.1.1) 50 bis 95 Gew.-Teilen Styrol, α-Methylstyrol, methylkemsubstituiertem Styrol, C₁-C₈-Alkylmethacrylat, insbesondere Methylmethacrylat, C₁-C₈-Alkylacrylat, insbesondere Methylacrylat, oder Mischungen dieser Verbindungen und
B.1.2) 5 bis 50 Gew.-Teilen Acrylnitril, Methacrylnitril C₁-C₈-Alkylmethacrylaten, insbesondere Methylmethacrylat, C₁-C₈-Alkylacrylat, insbesondere Methylacrylat, Maleinsäureanhydrid, C₁-C₄-alkyl- bzw. Phenyl-N-substituierte Maleinimide oder Mischungen dieser Verbindungen auf
B.2) 5 bis 95 Gew.-Teilen einer kautschukhaltigen Pfropfgrundlage
C) 14,0 bis 24,0 Gew.-Teile mindestens eines phosphorhaltigen Flammschutzmittels,
wobei die Summe der Gewichtsteile der Komponenten A bis C sich zu 100 Gewichtsteilen addiert und der Gesamtanteil des aus den Pfropfmonomeren gebildeten oder frei zugesetztem, nicht chemisch an die Pfropfgrundlage gebundenen Polymerisats B.1), weniger als 2,0 Gew.% bezogen auf die Gesamtformmasse ist.

2. Formmassen gemäß Anspruch 1, **dadurch gekennzeichnet, dass** Komponente
B) in einem Anteil von 5,0 bis 10,0 Gew.-Teile, und Komponente
C) in einem Anteil von 15,0 bis 20,0 Gew.-Teile enthalten ist.

3. Formmassen gemäß Anspruch 1, **dadurch gekennzeichnet, dass** Komponente B) in einem Anteil von 5,0 bis 9,0 Gew.-Teile, und Komponente C) in einem Anteil von 15,0 bis 18,0 Gew.-Teile enthalten ist.

4. Formmassen gemäß Anspruch 1, enthaltend
30 bis 80 Gew.-Teile B.1) und
20 bis 70 Gew.-Teile B.2)

5. Formmassen gemäß Anspruch 1, enthaltend als Kautschuke der Pfropfgrundlage B.2 Dienkautschuke, Acrylatkautschuke, Silikonkautschuke oder Ethylen-Propylen-Dien-Kautschuke.

6. Formmassen nach Anspruch 1, **dadurch gekennzeichnet, dass** das phosphorhaltiges Flammschutzmittel (D) ein Flammschutzmittel der allgemeinen Formel (V) 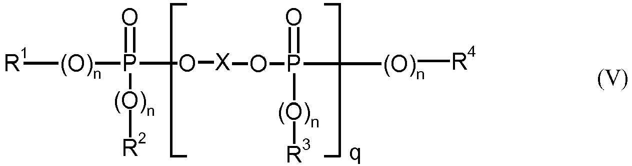 worin
R¹, R², R³ und R⁴, unabhängig voneinander jeweils gegebenenfalls halogeniertes C₁ bis C₈-Alkyl, jeweils gegebenenfalls durch Alkyl, vorzugsweise C₁ bis C₄-Alkyl, und/oder Halogen, vorzugsweise Chlor, Brom, substituiertes C₅ bis C₆-Cycloalkyl, C₆ bis C₂₀-Aryl oder C₇ bis C₁₂-Aralkyl,
n unabhängig voneinander, 0 oder 1
q 0,80 bis 5,00 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

7. Formmassen gemäß Anspruch 6, **dadurch gekennzeichnet, dass** X im Flammschutzmittel ausgewählt ist aus der Gruppe, die Phenyl, Biphenylen und Bisphenylisopropyliden umfasst.

8. Formmasse gemäß Anspruch 1, **dadurch gekennzeichnet, dass** der Gesamtanteil des aus den Pfropfmonomeren gebildeten oder frei zugesetztem, nicht chemisch an die Pfropfgrundlage gebundenen Polymerisats B.1), weniger als 1,5 Gew.% bezogen auf die Gesamtformmasse ist.

9. Formmasse gemäß Anspruch 1 enthaltend zusätzlich mindestens ein Additiv ausgewählt aus der Gruppe, die Flammschutzsynergisten, Antidrippingmittel, Gleit- und Entformungsmittel, Nukleiermittel, Stabilisatoren, Antistatika sowie Farbstoffe, Pigmente, Füll- und Verstärkungsstoffe umfasst.

10. Formmasse gemäß Anspruch 9 **dadurch gekennzeichnet, dass** die Additive D) in einem Anteil von 0,05 - 15,00 Gew.-Teile vorhanden sind.

11. Formmasse gemäß Anspruch 10 **dadurch gekennzeichnet, dass** Komponente D) mindestens ein fluoriertes Polyolefin in 0,1 bis 1,0 Gew.-Teilen bezogen auf die Gesamtformmasse enthält.

12. Formmasse gemäß Anspruch 10 **dadurch gekennzeichnet, dass** Komponente D) mindestens ein Entformungsmittel in 0,3 bis 0,8 Gew.-Teilen bezogen auf die Gesamtformmasse enthält.

13. Formmasse gemäß Anspruch 10 **dadurch gekennzeichnet, dass** Komponente D) mindestens einen Stabilisator in 0,06 bis 0,2 Gew.-Teilen bezogen auf die Gesamtformmasse enthält, wobei der Stabilisator ausgewählt ist aus der Gruppe, die sterisch gehinderten Phenole und Phosphite sowie Mischungen daraus umfaßt.

14. Verwendung der Formmassen gemäß Anspruch 1 zur Herstellung von Formkörpern.

15. Formkörper hergestellt aus Formmassen gemäß Anspruch 1.

## Claims

1. Flame-resistant, thermoplastic moulding compositions comprising
A) 65.0 to 82.0 parts by wt. of at least one aromatic polycarbonate,
B) 4.0 to 11.0 parts by wt. of at least one graft polymer of
B.1) 5 to 95 parts by wt. of a mixture of
B.1.1) 50 to 95 parts by wt. of styrene, α-methylstyrene, styrene substituted on the nucleus by methyl, C₁-C₈-alkyl methacrylate, in particular methyl methacrylate, C₁-C₈-alkyl acrylate, in particular methyl acrylate, or mixtures of these compounds and
B.1.2) 5 to 50 parts by wt. of acrylonitrile, methacrylonitrile, C₁-C₈-alkyl methacrylates, in particular methyl methacrylate, C₁-C₈-alkyl acrylate, in particular methyl acrylate, maleic anhydride, maleimides N-substituted by C₁-C₄-alkyl or phenyl or mixtures of these compounds on
B.2) 5 to 95 parts by wt. of a rubber-containing graft base
C) 14.0 to 24.0 parts by wt. of at least one phosphorus-containing flameproofing agent,
wherein the sum of the parts by weight of components A to C adds up to 100 parts by weight and the total content of the polymer B.1) which is formed from the grafting monomers or is added in the free form and is not bonded chemically to the graft base is less than 2.0 wt.%, based on the total moulding composition.

2. Moulding compositions according to claim 1, **characterized in that** they comprise component
B) in a content of from 5.0 to 10.0 parts by wt., and component
C) in a content of from 15.0 to 20.0 parts by wt.

3. Moulding compositions according to claim 1, **characterized in that** they comprise component
B) in a content of from 5.0 to 9.0 parts by wt., and component
C) in a content of from 15.0 to 18.0 parts by wt.

4. Moulding compositions according to claim 1, comprising
30 to 80 parts by wt. of B.1) and
20 to 70 parts by wt. of B.2)

5. Moulding compositions according to claim 1, comprising as rubbers of the graft base B.2 diene rubbers, acrylate rubbers, silicone rubbers or ethylene/propylene/diene rubbers.

6. Moulding compositions according to claim 1, **characterized in that** the phosphorus-containing flameproofing agent (D) is a flameproofing agent of the general formula (V) 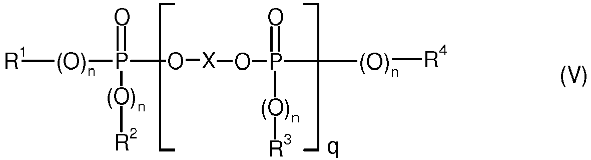 wherein
R¹, R², R³ and R⁴ independently of each other denote in each case optionally halogenated C₁ to C₈-alkyl, or C₅ to C₆-cycloalkyl, C₆ to C₂₀-aryl or C₇ to C₁₂-aralkyl in each case optionally substituted by alkyl, preferably C₁ to C₄-alkyl, and/or halogen, preferably chlorine, bromine,
n independently of each other denote 0 or 1
q denotes 0.80 to 5.00 and
X denotes a mono- or polynuclear aromatic radical having 6 to 30 C atoms, or a linear or branched aliphatic radical having 2 to 30 C atoms, which can be substituted by OH and can contain up to 8 ether bonds.

7. Moulding compositions according to claim 6, **characterized in that** X in the flameproofing agent is chosen from the group which includes phenyl, biphenylene and bisphenylisopropylidene.

8. Moulding composition according to claim 1, **characterized in that** the total content of the polymer B.1) which is formed from the grafting monomers or is added in the free form and is not bonded chemically to the graft base is less than 1.5 wt.%, based on the total moulding composition.

9. Moulding composition according to claim 1, additionally comprising at least one additive chosen from the group which includes flameproofing synergists, antidripping agents, lubricants and mould release agents, nucleating agents, stabilizers, antistatics and dyestuffs, pigments, fillers and reinforcing substances.

10. Moulding composition according to claim 9, **characterized in that** the additives D) are present in a content of 0.05 - 15.00 parts by wt.

11. Moulding composition according to claim 10, **characterized in that** component D) contains at least one fluorinated polyolefin in an amount of 0.1 to 1.0 part by wt., based on the total moulding composition.

12. Moulding composition according to claim 10, **characterized in that** component D) contains at least one mould release agent in an amount of 0.3 to 0.8 part by wt., based on the total moulding composition.

13. Moulding composition according to claim 10, **characterized in that** component D) contains at least one stabilizer in an amount of 0.06 to 0.2 part by wt., based on the total moulding composition, the stabilizer being chosen from the groups which includes sterically hindered phenols and phosphites and mixtures thereof.

14. Use of the moulding compositions according to claim 1 for the production of shaped articles.

15. Shaped articles produced from moulding compositions according to claim 1.

## Revendications

1. Matières à mouler thermoplastiques difficilement inflammables, contenant
A) 65,0 à 82,0 parties en poids d'au moins un polycarbonate aromatique,
B) 4,0 à 11,0 parties en poids d'au moins un produit de polymérisation par greffage formé à partir de
B.1) 5 à 95 parties en poids d'un mélange de
B.1.1) 50 à 95 parties en poids de styrène, d'α-méthylstyrène, de styrène substitué par méthyle sur le noyau, de méthacrylate d'alkyle en C₁-C₈, en particulier de méthacrylate de méthyle, d'acrylate d'alkyle en C₁-C₈, en particulier d'acrylate de méthyle, ou de mélanges de ces composés et
B.1.2) 5 à 50 parties en poids d'acrylonitrile, de méthacrylonitrile, de méthacrylates d'alkyle en C₁-C₈, en particulier de méthacrylate de méthyle, d'acrylate d'alkyle en C₁-C₈, en particulier d'acrylate de méthyle, d'anhydride maléique, de maléimides N-substitués par alkyle en C₁-C₄ ou phényle ou de mélanges de ces composés, sur
B.2) 5 à 95 parties en poids d'une base de greffage contenant du caoutchouc
C) 14,0 à 24,0 parties en poids d'au moins un agent ignifuge phosphoré,
la somme des parties en poids des composants A à C étant égale à 100 parties en poids et la proportion totale du polymérisat B.1), formé à partir des monomères greffés ou ajouté en étant libre, non lié chimiquement à la base de greffage, étant inférieure à 2,0 % en poids, par rapport à la matière à mouler totale.

2. Matières à mouler selon la revendication 1, **caractérisés en ce que** le composant
B) est contenu en une proportion de 5,0 à 10,0 parties en poids, et le composant
C) est contenu en une proportion de 15,0 à 20,0 parties en poids.

3. Matières à mouler selon la revendication 1, **caractérisées en ce que** le composant
B) est contenu en une proportion de 5,0 à 9,0 parties en poids, et le composant
C) est contenu en une proportion de 15,0 à 18,0 parties en poids.

4. Matières à mouler selon la revendication 1, contenant
30 à 80 parties en poids de B.1) et
20 à 70 parties en poids de B.2).

5. Matières à mouler selon la revendication 1, contenant en tant que caoutchoucs de la base de greffage B.2 des caoutchoucs diène, des caoutchoucs acrylate, des caoutchoucs silicone ou des caoutchoucs éthylène-propylène-diène.

6. Matières à mouler selon la revendication 1, **caractérisées en ce que** l'agent ignifuge phosphoré (D) est un agent ignifuge de formule générale (V) 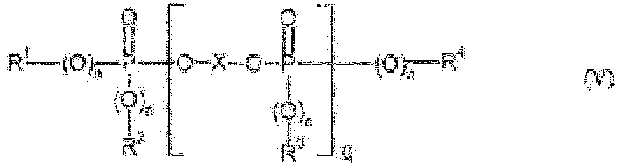 dans laquelle
R¹, R², R³ et R⁴ représentent chacun indépendamment les uns des autres un groupe alkyle en C₁-C₈ éventuellement halogéné, un groupe cycloalkyle en C₅-C₆, aryle en C₆-C₂₀ ou aralkyle en C₇-C₁₂, chacun éventuellement substitué par alkyle, de préférence alkyle en C₁-C₄, et/ou halogéno, de préférence chloro, bromo,
n représente chaque fois indépendamment 0 ou 1,
q représente 0,80 à 5,00 et
X représente un radical aromatique mono- ou polynucléaire ayant de 6 à 30 atomes de carbone, ou un radical aliphatique linéaire ou ramifié ayant de 2 à 30 atomes de carbone, qui peut être substitué par OH et comporter jusqu'à 8 liaisons éther.

7. Matières à mouler selon la revendication 6, **caractérisées en ce que** dans l'agent ignifuge X est choisi dans le groupe qui comprend les groupes phényle, biphénylène et bisphénylisopropylidène.

8. Matière à mouler selon la revendication 1, **caractérisée en ce que** la proportion totale du polymérisat B.1), formé à partir des monomères greffés ou ajouté en étant libre, non lié chimiquement à la base de greffage, est inférieure à 1,5 % en poids, par rapport à la matière à mouler totale.

9. Matière à mouler selon la revendication 1, contenant en outre au moins un additif choisi dans le groupe constitué par des agents synergiques ignifuges, des agents anticoulure, des lubrifiants et agents de démoulage, des agents de nucléation, des stabilisants, des agents antistatiques ainsi que des colorants, des pigments, des charges et matières de renforcement.

10. Matière à mouler selon la revendication 9, **caractérisée en ce que** les additifs D) sont présents en une proportion de 0,05 - 15,00 parties en poids.

11. Matière à mouler selon la revendication 10, **caractérisée en ce que** le composant D) contient au moins une polyoléfine fluorée en 0,1 à 1,0 partie en poids, par rapport à la matière à mouler totale.

12. Matière à mouler selon la revendication 10, **caractérisée en ce que** le composant D) contient au moins un agent de démoulage en 0,3 à 0,8 partie en poids, par rapport à la matière à mouler totale.

13. Matière à mouler selon la revendication 10, **caractérisée en ce que** le composant D) contient au moins un stabilisant en 0,06 à 0,2 partie en poids, par rapport à la matière à mouler totale, le stabilisant étant choisi dans le groupe qui comprend des phosphites et phénols à empêchement stérique ainsi que des mélanges de ceux-ci.

14. Utilisation des matières à mouler selon la revendication 1, pour la production de corps moulés.

15. Corps moulé produit à partir de matières à mouler selon la revendication 1.
